(19) 

Europäisches
Patentamt
European
Patent Office
Office européen
des brevets

(11) **EP 4 700 608 A1**

(12) **EUROPEAN PATENT APPLICATION**
published in accordance with Art. 153(4) EPC

(43) Date of publication:
**25.02.2026 Bulletin 2026/09**

(21) Application number: **24803037.1**

(22) Date of filing: **09.05.2024**

(51) International Patent Classification (IPC):
*G06F 16/9535* (2019.01)    *G06F 16/33* (2025.01)
*G06F 40/30* (2020.01)    *G06Q 30/0601* (2023.01)
*G06N 3/048* (2023.01)    *G06N 3/084* (2023.01)

(86) International application number:
**PCT/CN2024/091820**

(87) International publication number:
**WO 2024/230757 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023 CN 202310528802**

(71) Applicant: **Huawei Technologies Co., Ltd.
Shenzhen, Guangdong 518129 (CN)**

(72) Inventors:
• **LI, Xiangyang
Shenzhen, Guangdong 518129 (CN)**

• **CHEN, Bo
Shenzhen, Guangdong 518129 (CN)**
• **HOU, Lu
Shenzhen, Guangdong 518129 (CN)**
• **TANG, Ruiming
Shenzhen, Guangdong 518129 (CN)**
• **YAO, Jun
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND RELATED APPARATUS**

(57) A data processing method is provided, which may be applied to the field of artificial intelligence. The method includes: obtaining first data, where the first data includes attribute information of a user or attribute information of an item in a plurality of dimensions; generating second data based on the first data, where the second data is a natural language text used to describe the attribute information; obtaining a first feature representation based on the first data through an embedding network, where the first feature representation includes a plurality of embedding vectors, and each embedding vector corresponds to one dimension; obtaining a second feature representation based on the second data through a natural language processing model, where the second feature representation includes a semantic feature of the second data; and updating the embedding network based on a difference between the second feature representation and the first feature representation, to obtain an updated embedding network. In this application, collaborative information and semantic information are combined to perform modeling, so that knowledge of a language model can be fully used, thereby improving prediction effect.

Obtain first data, where the first data includes attribute information of a user or attribute information of an item in a plurality of dimensions — 501

Generate second data based on the first data, where the second data is a natural language text used to describe the attribute information — 502

Obtain a first feature representation based on the first data through an embedding network, where the first feature representation includes a plurality of embedding vectors, and each embedding vector corresponds to one dimension — 503

Obtain a second feature representation based on the second data through a natural language processing model, where the second feature representation includes a semantic feature of the second data — 504

Update the embedding network based on a difference between the second feature representation and the first feature representation, to obtain an updated embedding network — 505

FIG. 5

**Description**

This application claims priority to Chinese Patent Application No. 202310528802.9, filed with the China National Intellectual Property Administration on May 10, 2023 and entitled "DATA PROCESSING METHOD AND RELATED APPARATUS", which is incorporated herein by reference in its entirety.

**TECHNICAL FIELD**

This application relates to the field of artificial intelligence, and in particular, to a data processing method and a related apparatus.

**BACKGROUND**

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

A large-scale information retrieval system (such as a recommendation system, a search engine, or computational advertising) aims to provide, by retrieving from massive items (such as physical items, information, advertisements, music, videos, and software applications), a user with an item that interests the user most. Usually, a conventional recommendation model uses information such as a user attribute and an item attribute, and predicts user's interest in an unknown item by computing a similarity and establishing a user-item relationship model. Advantages of this type of model are that an architecture of the model is simple and an online inference latency is short.

However, text information, such as a brand name of an item and a title of a movie, usually appears in the user attribute and item attribute. An existing recommendation model cannot model semantic information, can only use collaborative information in a data set to perform modeling, and cannot obtain external semantic knowledge. Consequently, recommendation precision of the recommendation model is poor.

SUMMARY

This application provides a data processing method, to improve recommendation precision of a recommendation model.

According to a first aspect, this application provides a data processing method. The method includes: obtaining first data, where the first data includes attribute information of a user or attribute information of an item in a plurality of dimensions; generating second data based on the first data, where the second data is a natural language text used to describe the attribute information; obtaining a first feature representation based on the first data through an embedding network, where the first feature representation includes a plurality of embedding vectors, and each embedding vector corresponds to one dimension; obtaining a second feature representation based on the second data through a natural language processing model, where the second feature representation includes a semantic feature of the second data; and updating the embedding network based on a difference between the second feature representation and the first feature representation, to obtain an updated embedding network.

Compared with the conventional technology in which it is difficult for a recommendation model based only on a collaborative signal to model a semantic signal and obtain knowledge of an outside world, in this embodiment of this application, collaborative information and semantic information are combined to perform modeling, so that knowledge of a language model can be fully used, thereby improving prediction effect.

In a possible implementation, the second data includes a plurality of character units, and the natural language processing model refers to each character unit and a context of each character unit in the second data when processing each character unit.

In a possible implementation, the second data includes a character of the dimension, a character of the attribute information, and a character indicating an association between the dimension and the attribute information.

In a possible implementation, the second data further includes a character indicating separation between attribute information in different dimensions.

In a possible implementation, the first data includes the attribute information of the user and the attribute information of the item in the plurality of dimensions, and the second data further includes a character indicating separation between the attribute information of the user and the attribute information of the item.

In a possible implementation, the first data is tabular data.

In a possible implementation, the method further includes:

mapping the first feature representation and the second feature representation to a same dimension; and
based on the difference between the second feature representation and the first feature representation includes: based on a difference between the mapped second feature representation and the mapped first feature representation.

In a possible implementation, the method further includes: updating the natural language processing model based on the difference between the second feature representation and the first feature representation, to obtain an updated natural language processing model.

According to a second aspect, this application provides a data processing method. The method includes:

obtaining attribute information of a second user, attribute information of a second item, and an operation log of the second user on the second item;
obtaining, based on the attribute information of the second user and the attribute information of the second item through a recommendation model, prediction operation information of the second user on the second item, where the recommendation model includes the updated embedding network described in any implementation of the first aspect; and
fine-tuning the recommendation model based on the operation log and the prediction operation information.

According to a third aspect, this application provides a data processing method. The method includes:

obtaining attribute information of a third user and attribute information of a third item;
obtaining, based on the attribute information of the third user and the attribute information of the third item through a recommendation model, prediction operation information of the second user on the second item, where the recommendation model includes the updated embedding network described in any implementation of the first aspect or the fine-tuned recommendation model described in the second aspect; and
when the prediction operation information meets a preset condition, recommending the third item to the third user.

In this embodiment of this application, although a natural language processing model is used during training, the natural language processing model is not used during actual online inference. Instead, a collaborative model (which incorporates a processing capability of the natural language processing model) is used, which improves effect of the collaborative model while ensuring a low-latency feature of the model.

According to a fourth aspect, this application provides a data processing apparatus. The apparatus includes:

an obtaining module, configured to obtain first data, where the first data includes attribute information of a user or attribute information of an item in a plurality of dimensions; and
a processing module, configured to: generate second data based on the first data, where the second data is a natural language text used to describe the attribute information;
obtain a first feature representation based on the first data through an embedding network, where the first feature representation includes a plurality of embedding vectors, and each embedding vector corresponds to one dimension;
obtain a second feature representation based on the second data through a natural language processing model, where the second feature representation includes a semantic feature of the second data; and
update the embedding network based on a difference between the second feature representation and the first feature representation, to obtain an updated embedding network.

In a possible implementation, the second data includes a plurality of character units, and the natural language processing model refers to each character unit and a context of each character unit in the second data when processing each character unit.

In a possible implementation, the second data includes a character of the dimension, a character of the attribute information, and a character indicating an association between the dimension and the attribute information.

In a possible implementation, the second data further includes a character indicating separation between attribute information in different dimensions.

In a possible implementation, the first data includes the attribute information of the user and the attribute information of the item in the plurality of dimensions, and the second data further includes a character indicating separation between the attribute information of the user and the attribute information of the item.

In a possible implementation, the first data is tabular data.

In a possible implementation, the processing module is further configured to:
map the first feature representation and the second feature representation to a same dimension.
The processing module is specifically configured to:
based on a difference between the mapped second feature representation and the mapped first feature representation.
In a possible implementation, the processing module is further configured to:
update the natural language processing model based on the difference between the second feature representation and the first feature representation, to obtain an updated natural language processing model.
According to a fifth aspect, this application provides a data processing apparatus. The apparatus includes:

an obtaining module, configured to obtain attribute information of a second user, attribute information of a second item, and an operation log of the second user on the second item; and
a processing module, configured to obtain, based on the attribute information of the second user and the attribute information of the second item through a recommendation model, prediction operation information of the second user on the second item, where the recommendation model includes the updated embedding network described in any implementation of the first aspect; and
fine-tune the recommendation model based on the operation log and the prediction operation information.

According to a sixth aspect, this application provides a data processing apparatus. The apparatus includes:

an obtaining module, configured to obtain attribute information of a third user and attribute information of a third item; and
a processing module, configured to obtain, based on the attribute information of the third user and the attribute information of the third item through a recommendation model, prediction operation information of the second user on the second item, where the recommendation model includes the updated embedding network according to any implementation of the first aspect or the fine-tuned recommendation model according to the second aspect; and
when the prediction operation information meets a preset condition, recommend the third item to the third user.

According to a seventh aspect, an embodiment of this application provides a data processing apparatus that may include a memory, a processor, and a bus system. The memory is configured to store a program, and the processor is configured to execute the program in the memory, to perform any optional method in the first aspect, any optional method in the second aspect, and any optional method in the third aspect.
According to an eighth aspect, an embodiment of this application provides a computer-readable storage medium. The computer-readable storage medium stores a computer program. When the computer program is run on a computer, the computer is enabled to perform any optional method in the first aspect, any optional method in the second aspect, and any optional method in the third aspect.
According to a ninth aspect, an embodiment of this application provides a computer program product, including code. When the code is executed, the computer program product is configured to perform any optional method in the first aspect, any optional method in the second aspect, and any optional method in the third aspect.
According to a tenth aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

**BRIEF DESCRIPTION OF DRAWINGS**

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4A is a diagram of a recommendation flow scenario according to an embodiment of this application;
FIG. 4B is a diagram of a network structure according to an embodiment of this application;
FIG. 4C is a diagram of a network structure according to an embodiment of this application;
FIG. 5 is a schematic flowchart of a data processing method according to an embodiment of this application;
FIG. 6 is a diagram of data conversion according to an embodiment of this application;
FIG. 7 is a diagram of comparative learning according to an embodiment of this application;
FIG. 8A is a diagram of model fine-tuning according to an embodiment of this application;

FIG. 8B is a diagram of an application architecture according to an embodiment of this application;
FIG. 9 is a diagram of a structure of a data processing apparatus according to an embodiment of this application;
FIG. 10 is a diagram of an execution device according to an embodiment of this application;
FIG. 11 is a diagram of a training device according to an embodiment of this application; and
FIG. 12 is a diagram of a chip according to an embodiment of this application.

## DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may know that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

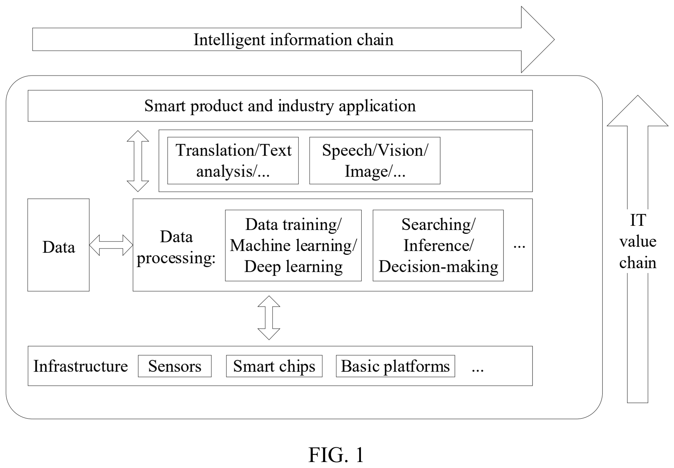

An overall working procedure of an artificial intelligence system is first described. FIG. 1 is diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain", from an underlying infrastructure and information (technology providing and processing implementation) of artificial intelligence to an industrial ecological process of a system, reflects value brought by artificial intelligence to the information technology industry.

(1) Infrastructure

The infrastructure provides computing capability support for the artificial intelligence system, implements communication with the outside world, and implements support by using basic platforms. The infrastructure communicates with the outside by using sensors. A computing capability is provided by smart chips (hardware acceleration chips such as a CPU, an NPU, a GPU, an ASIC, and an FPGA). The basic platforms include related platforms, for example, a distributed computing framework and a network, for assurance and support. The basic platforms may include a cloud storage and a computing network, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formalized information based on an inference control policy. A typical function is searching and matching.

Decision-making is a process of making a decision after intelligent information is inferred, and usually provides functions such as classification, ranking, and prediction.

(4) General capability

After data processing mentioned above is performed on data, some general capabilities may further be formed based on a data processing result, for example, an algorithm or a general system such as translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

Embodiments of this application may be applied to the information recommendation field. The scenario includes but is not limited to scenarios such as e-commerce product recommendation, search engine result recommendation, application market recommendation, music recommendation, and video recommendation. A recommended item in various different application scenarios may also be referred to as an "object" for ease of subsequent description. That is, in different recommendation scenarios, the recommended object may be an app, a video, music, or an item (for example, a presentation interface of an online shopping platform displays different items according to different users, which may also be presented based on a recommendation result of a recommendation model in essence). These recommendation scenarios usually involve collection of a user behavior log, log data preprocessing (for example, quantization and sampling), sample set training to obtain a recommendation model, and analyze and process, based on the recommendation model, an object (for example, an app or music) in a scenario corresponding to a training sample item. For example, if a sample selected in a training process of the recommendation model is from an operation performed by a user of an application market in a mobile phone on a recommended app, a trained recommendation model is applicable to the app (application) market in the mobile phone, or may be used in an app (application) market in another type of terminal to recommend an app in the terminal. The recommendation model finally computes recommendation probabilities or scores of to-be-recommended objects. A recommendation system selects recommendation results according to a specific selection rule. For example, the recommendation results are ranked based on the recommendation probabilities or the scores, and are presented to the user through a corresponding application or terminal device, and the user performs an operation on an object in the recommendation results to perform a process such as generating the user behavior log.

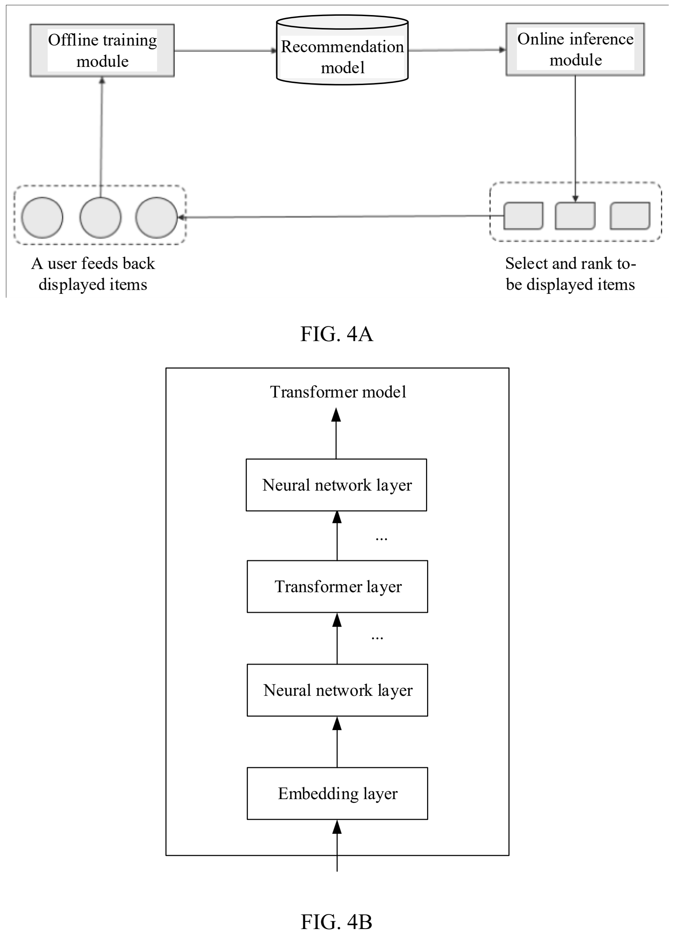

Refer to FIG. 4A. In a recommendation process, when a user interacts with the recommendation system, a recommendation request may be triggered. The recommendation system inputs the request and related feature information to a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs user behavior, such as browsing, clicking, and downloading. The user behavior is stored in a log as training data. An offline training module irregularly updates a parameter of the recommendation model to improve recommendation effect of the model.

For example, when the user starts an application market in a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged in the front rank, and an application that is less likely to be downloaded is arranged in the rear rank. User behavior is also stored in a log, and an offline training module trains and updates a parameter of a prediction model.

For another example, in an application related to a life-long companion, a cognitive brain may be constructed by simulating a mechanism of a human brain and based on historical data of a user in domains such as video, music, and news by using various models and algorithms, thereby establishing a life-long learning system framework for the user. The life-long companion may record a past event of the user based on system data, application data, and the like, understand a current intention of the user, predict a future action or future behavior of the user, and finally implement an intelligent service. At a current first stage, user behavior data (including information such as a device-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

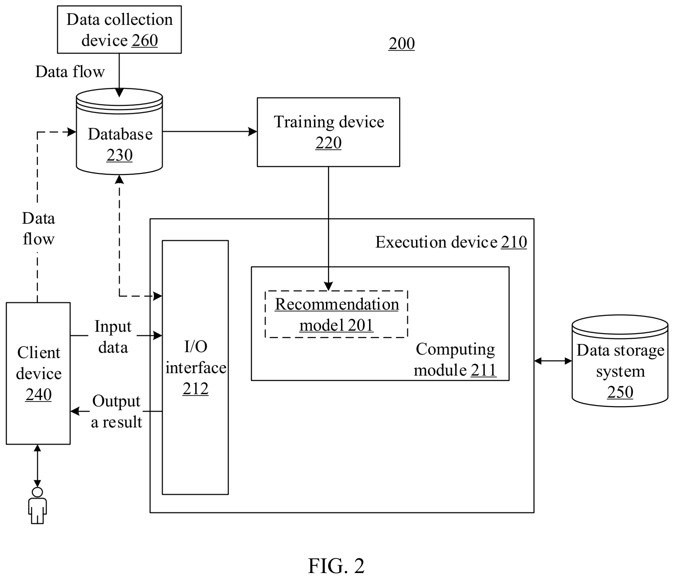

Refer to FIG. 2. An embodiment of the present invention provides a recommendation system architecture 200. A data collection device 260 is configured to collect a sample. One training sample may include a plurality of pieces of feature information (alternatively described as attribute information, for example, a user attribute and an item attribute). There may be a plurality of types of feature information, which may specifically include user feature information, object feature information, and a label feature. The user feature information represents a feature of a user, for example, a gender, an age, an occupation, or a hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of an item. The label feature indicates whether the sample is a positive sample or a negative sample. Usually, a label feature of a sample may be obtained based on information about an operation performed by the user on a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is the positive sample; or if the user does not perform any operation on the recommended object, the label feature is 0, indicating that the sample is the negative sample. The sample may be stored in a database 230 after being collected. A part or all of feature information in the sample in the database 230 may be directly obtained from a client device 240, for example, user feature information, information (used to determine a type identifier) about an operation performed by the user on an object, and object feature information (for example, an object identifier). A training device 220 performs training based on a sample in the database 230 to obtain a model parameter matrix for generating a recommendation model 201. The following describes in more detail how the training device 220 performs training to obtain the model parameter matrix for generating the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A computing module 211 obtains a recommendation result based on the evaluation result of the recommendation model 201, and recommends the recommendation result to the client device through an I/O interface 212.

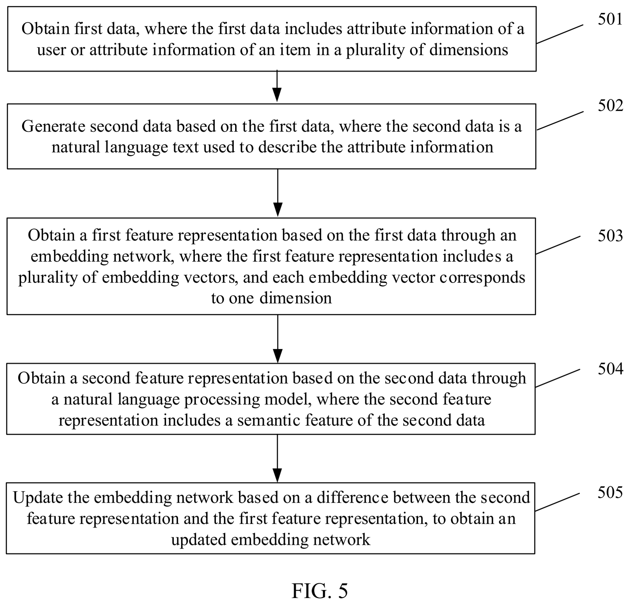

In this embodiment of this application, the training device 220 may select positive and negative samples from a sample set in the database 230, add the positive and negative samples to a training set, and then perform training based on the samples in the training set by using a recommendation model, to obtain a trained recommendation model. For implementation details of the computing module 211, refer to detailed descriptions of a method embodiment shown in FIG. 5.

After performing training based on the sample to obtain the model parameter matrix that is used for constructing the recommendation model 201, the training device 220 sends the recommendation model 201 to an execution device 210, or directly sends the model parameter matrix to the execution device 210. The recommendation model is constructed in the execution device 210, for recommending a corresponding system. For example, a recommendation model obtained through training based on a video-related sample may be used in a video website or app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, a user identifier, a user identity, a gender, an occupation, and a hobby, from the client device 240 through the I/O interface 212. The information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object in the front rank is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that FIG. 2 is merely a diagram of a system architecture according to an embodiment of the present invention. A position relationship between devices, components, modules, and the like shown in the figure does not constitute any limitation. For example, in FIG. 2, the data storage system 250 is an external memory relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

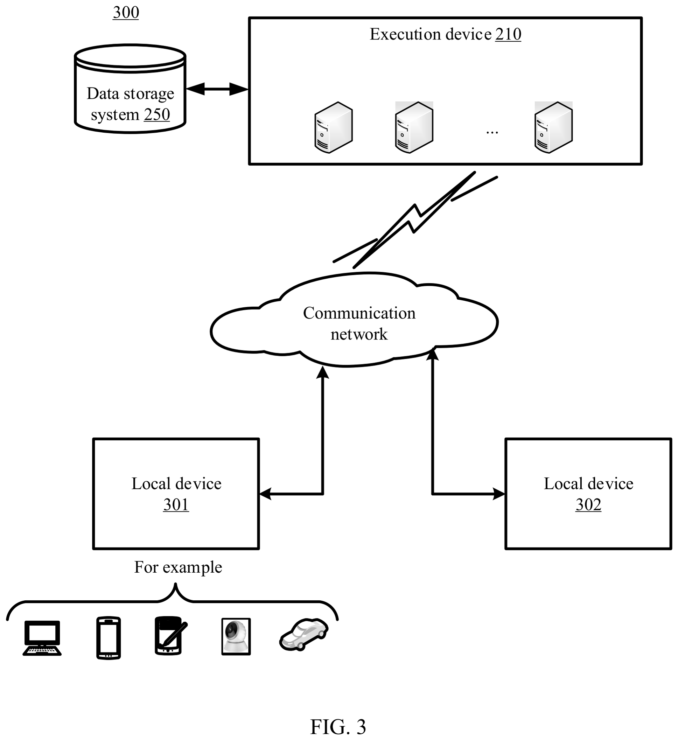

Refer to FIG. 3. An embodiment of the present invention provides a system architecture 300. In this architecture, the execution device 210 is implemented by one or more servers. Optionally, the execution device 210 works with another computing device, for example, a device such as a data storage device, a router, or a load balancer. The execution device 210 may be disposed on one physical site, or distributed on a plurality of physical sites. The execution device 210 may use data in a data storage system 250 or invoke program code in the data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends the to-be-recommended objects to a user based on a ranking result. For example, the execution device 210 recommends top 10 objects in the ranking result to the user.

The data storage system 250 is configured to receive and store a parameter that is of the recommendation model and that is sent by a training device, is configured to store data of a recommendation result obtained by using the recommendation model, and certainly may further include program code (or an instruction) needed for normal running of the storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data needed by the execution device to the execution device 210. Correspondingly, the execution device 210 receives and stores (or buffers) the data. Certainly, the data storage system 250 may be alternatively deployed in the execution device 210. When the data storage system 250 is deployed in the execution device 210, the distributed storage system may include one or more memories. Optionally, when there are a plurality of memories, different memories are configured to store different types of data. For example, the model parameter of the recommendation model generated by the training device and the data of the recommendation result obtained by using the recommendation model may be stored in two different memories respectively.

Users may operate respective user equipment (for example, a local device 301 and a local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communication network of any communication mechanism/communication standard. The communication network may be a wide area network, a local area network, a point-to-point connection, or any combination thereof.

In another implementation, the execution device 210 may be implemented by the local device. For example, the local device 301 may implement a recommendation function of the execution device 210 based on a recommendation model by obtaining user feature information and feeding back a recommendation result to the user, or provide a service for the user of the local device 302.

Embodiments of this application relate to massive application of a neural network. Therefore, for ease of understanding, the following first describes related terms and related concepts such as the neural network in embodiments of this application.

1. Click-through rate (click-through rate, CTR)

The click-through rate, also referred to as a click-through ratio, is a ratio of a quantity of clicks for recommendation information (for example, a recommended item) on a website or an application to a quantity of impressions for the recommendation information. The click-through rate is usually an important indicator in a recommendation system for measuring the recommendation system.

2. Personalized recommendation system

The personalized recommendation system is a system that analyzes historical data of a user (for example, operation information in embodiments of this application) by using a machine learning algorithm, and with this, predicts a new request and provides a personalized recommendation result.

3. Offline training (offline training)

The offline training is a module, in a personalized recommendation system, that iteratively updates a parameter of a recommendation model by using a machine learning algorithm based on historical data of a user (for example, operation information in embodiments of this application) until a specified requirement is met.

4. Online inference (online inference)

The online inference is to predict, based on a model obtained through offline training, preference of a user for a recommended item in a current context environment based on features of the user, the item, and a context, and predict a probability that the user selects the recommended item.

5. Recommendation model based on collaborative information

The recommendation model based on collaborative information is an algorithm that uses information such as user behavior data and an item attribute, and computes a similarity and establishes a user-item relationship model, to implement efficient personalized recommendation. A core idea of the recommendation model is to use similar users and items to predict users' interest in unknown items, to provide more accurate and personalized recommendation results for users.

For example, FIG. 3 is a diagram of a recommendation system according to an embodiment of this application. As shown in FIG. 3, when a user enters a system, a recommendation request is triggered. The recommendation system inputs the request and related information (for example, operation information in this embodiment of this application) of the request into the recommendation model, and then predicts a selection rate of the user for an item in the system. Further, items are ranked in descending order of predicted selection rates or a function of the selection rates. That is, the recommendation system may sequentially display the items at different locations as a recommendation result for the user. The user browses the items at different locations, and performs user behavior such as browsing, selecting, and downloading. In addition, an actual behavior of the user is stored in a log as training data. An offline training module continuously updates a parameter of the recommendation model to improve prediction effect of the model.

For example, when the user starts an application market in a smart terminal (for example, a mobile phone), a recommendation system in the application market may be triggered. The recommendation system in the application market predicts probabilities that the user downloads candidate recommended apps, based on a historical behavior log of the user, for example, a historical download record of the user, a user selection record, and a feature of the application market, for example, environment feature information such as time and a location. The recommendation system in the application market may display the candidate apps in descending order of values of predicted probabilities based on a computing result, to increase download probabilities of the candidate apps.

For example, an app with a high predicted user selection rate may be displayed at a recommendation location in the front rank, and an app with a low predicted user selection rate may be displayed at a recommendation location in the rear rank.

The recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b)$$

s=1, 2, ..., or n. n is a natural number greater than 1, Ws is a weight of xs, b is a bias of the neuron, and f is an activation function (activation functions) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Usually, a first layer is the input layer, a last layer is the output layer, and an intermediate layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + b)$. $\vec{x}$ is an input vector, $\vec{y}$ is an output vector, b is an offset vector, W is a weight matrix (also referred to as a coefficient), and $\alpha$ () is an activation function. At each layer, such a simple operation is performed on the input vector $\vec{x}$, to obtain the output vector $\vec{y}$. Because the DNN has a large quantity of layers, a quantity of coefficients W and a quantity of offset vectors b are also large. Definitions of these parameters in the DNN are as follows: The coefficient W is used as an example. It is assumed that in a DNN having three layers, a linear coefficient from a $4^{th}$ neuron at the $2^{nd}$ layer to a $2^{nd}$ neuron at the $3^{rd}$ layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, before a first update, there is usually an initialization process, that is, preconfiguring a parameter for each layer of the deep neural network). For example, if the predicted value of the network is large, the weight vector is adjusted to decrease the predicted value, and adjustment is continuously performed, until the deep neural network can predict the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A larger output value (loss) of the loss function represents a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, such as a weight matrix, of an optimal model.

(5) Transformer layer

A neural network includes an embedding layer and at least one transformer layer. The at least one transformer layer may be N transformer layers (N is an integer greater than 0), and each transformer layer includes an attention layer, an addition and normalization (add & norm) layer, a feedforward (feedforward) layer, and an addition and normalization layer that are sequentially adjacent to adjacent each other. At the embedding layer, embedding processing is performed on a current input to obtain a plurality of embedding vectors. At the attention layer, P input vectors are obtained from a layer preceding a first transformer layer. Any first input vector in the P input vectors is used as a center, and an intermediate vector corresponding to the first input vector is obtained based on a degree of correlation between each input vector within a preset attention window and the first input vector. In this way, P intermediate vectors corresponding to the P input vectors are determined. At the pooling layer, the P intermediate vectors are combined into Q output vectors. A plurality of output vectors obtained at a last transformer layer in the transformer layer are used as feature representations of a current input.

FIG. 4B is a schematic of a structure of a transformer model. It should be understood that the structure in FIG. 4B is merely an example, and a quantity of neural network layers may be set as required. At the embedding layer, embedding processing may be performed on the input, to obtain a plurality of feature vectors. A core characteristic of the transformer model is a unique attention mechanism used by the transformer model. During processing of a natural language, for example, a sentence, the transformer model uses the attention mechanism to assign different attention coefficients to word vectors in the sentence. Therefore, impact of a context on words in the sentence is considered more comprehensively. At the embedding layer, N embedding vectors $X_l$ may be obtained based on node features and position code of nodes in a current sequence. The attention layer is connected to the embedding layer. The N embedding vectors are obtained from the embedding layer and used as input vectors; the input vectors are aggregated based on a degree of correlation between the N input vectors, to obtain N output vectors; and the N output vectors are output to a following transformer layer. At a transformer layer, an output of a previous layer is obtained and used as an input vector, and operations similar to those of a previous transformer layer are performed.

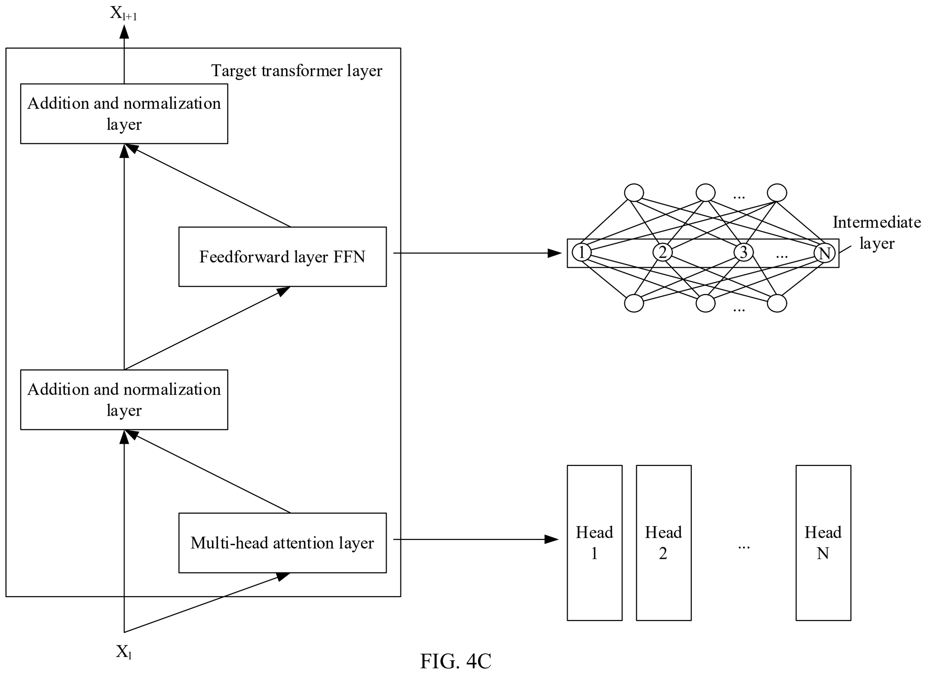

FIG. 4C is a schematic of a structure of a transformer layer. The transformer layer may include a multi-head attention layer (or an attention layer for short), an addition and normalization (add & norm) layer, a feedforward layer (feedforward net, FFN), and an addition and normalization layer that are sequentially adjacent to each other.

At the multi-head attention layer, N input vectors $X_l$ are obtained from a layer preceding the multi-head attention layer, where the N input vectors $X_l$ may be represented as a matrix X; and the multi-head attention layer transforms, by using a self-attention mechanism, the vectors based on a degree of correlation between the vectors, to obtain N output vectors, where the N output vectors may be represented as a matrix Y. It may be understood that, when the multi-head attention layer is a layer directly connected to an embedding layer, for example, the transformer layer directly connected to the embedding layer in FIG. 4C, an input vector obtained by the multi-head attention layer is an embedding vector that is output by the embedding layer. When the multi-head attention layer is a multi-head attention layer included in a following transformer layer, for example, a multi-head attention layer included in a transformer layer directly connected to a previous transformer layer in FIG. 4C, an input vector obtained by the multi-head attention layer is an output vector of a previous transformer layer. The multi-head attention layer may include a plurality of attention heads (heads) (for example, a head 1, a head 2, ..., and a head N shown in FIG. 4C).

(6) Attention mechanism (attention mechanism)

The attention mechanism simulates an internal process of an observational behavior of a creature, and is a mechanism that aligns internal experience with external feelings to increase observation precision of some regions. The mechanism can quickly select high-value information from a large amount of information by using limited attention resources. The attention mechanism is widely used in natural language processing tasks, especially machine translation, because the attention mechanism can quickly extract an important feature of sparse data. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

$Lx=\|Source\|$ represents a length of a source. The formula means that constituent elements in the source are assumed to be a series of data pairs. At this time, given an element query in a target (target), a weight coefficient of each key corresponding to a value is obtained by calculating similarity or a correlation between the query and each key. Then, weighted summation is performed on values, to obtain a final attention value. Therefore, in essence, the attention mechanism is to perform weighted summation on values of the elements in the source, and a query and key are used to calculate a weight coefficient of a corresponding value. Conceptually, attention may be understood as selecting a small amount of important information from a large amount of information, focusing on the important information, and ignoring most of unimportant information. A process of focusing is reflected in calculation of a weight coefficient. A greater weight indicates that a value corresponding to the weight is more focused. In other words, the weight indicates importance of information, and the value is the information corresponding to the weight. The self-attention mechanism may be understood as an intra attention (intra attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

(7) Natural language processing (natural language processing, NLP)

Natural language (natural language) is human language, and natural language processing (NLP) is processing of the human language. Natural language processing is a process of systematic analysis, understanding, and information extraction of text data in an intelligent and efficient manner. By using NLP and components of NLP, massive chunks of text data can be organized, or numerous automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be solved.

(8) Pre-trained language model (pre-trained language model)

The pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of unsupervised text to learn a word representation. At a fine-tuning (fine-tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

A large-scale information retrieval system (such as a recommendation system, a search engine, or computational advertising) aims to provide, by retrieving from massive items (such as physical items, information, advertisements, music, videos, and software applications), a user with an item that interests the user most. Usually, a conventional recommendation model uses information such as a user attribute and an item attribute, and predicts user's interest in an unknown item by computing a similarity and establishing a user-item relationship model. Advantages of this type of model are that an architecture of the model is simple and an online inference latency is short.

However, text information, such as a brand name of an item and a title of a movie, usually appears in the user attribute and item attribute. An existing recommendation model cannot model semantic information, can only use collaborative information in a data set to perform modeling, and cannot obtain external semantic knowledge. Consequently, recommendation precision of the recommendation model is poor.

To resolve the following problem, refer to FIG. 5. FIG. 5 is a schematic of an embodiment of a data processing method according to an embodiment of this application. As shown in FIG. 5, the data processing method provided in this embodiment of this application includes the following steps.

501: Obtain first data, where the first data includes attribute information of a user or attribute information of an item in a plurality of dimensions.

In this embodiment of this application, an entity for performing step 501 may be a terminal device, and the terminal device may be a portable mobile device, for example, but not limited to a mobile or portable computing device (for example, a smartphone), a personal computer, a server computer, a handheld device (for example, a tablet computer) or a laptop device, a multiprocessor system, a game console or controller, a microprocessor-based system, a set-top box, a programmable consumer electronic product, a mobile phone, a mobile computing and/or communication device having a wearable or accessory form factor (for example, a watch, glasses, a headset, or an earbud), a network PC, a minicomputer, a mainframe computer, or a distributed computing environment including any of the foregoing systems or devices.

In this embodiment of this application, the entity for performing step 501 may be a cloud-side server. For ease of description, the forms of the entity for performing step 501 are not differentiated in the following description, and are all described as a training device.

In a possible implementation, the training device may obtain an operation log (or may be referred to as interaction data between the user and a plurality of items) of the user, and the operation log may include information about a plurality of items that the user interacts with.

The item may be a physical item or a virtual item, for example, may be an item such as an app, music, a video, a web page, an advertisement, or news.

In a possible implementation, the attribute information of the user or the attribute information of the item may be obtained.

The attribute information of the user may be an attribute related to a preference feature of the user, for example, at least one of a gender, an age, an occupation, an income, a hobby, and an education degree. The gender may be male or female, the age may be a number ranging from 0 to 100, the occupation may be a teacher, a programmer, a chef, or the like, the hobby may be basketball, tennis, running, or the like, and the education degree may be a primary education degree, a lower secondary education degree, an upper secondary education degree, a bachelor's degree, or the like. The attribute information of the user may further include a historical operation log (for example, a historical operation object and an operation type) of the user. A specific type of the attribute information of the user is not limited in this application.

The item may be a physical item or a virtual item, for example, may be an item such as an application (application, app), audio/video, a web page, and news. The attribute information of the item may be at least one of an item name, a developer, an installation package size, a category, and a degree of praise. For example, the item is an application. The category of the item may be a chat category, a running game, an office category, or the like, and the degree of praise may be a score and a comment made on the item, or the like. A specific type of the attribute information of the item is not limited in this application.

In addition, optionally, context information may be further obtained. For example, the context information may be a time context or a location context.

In a possible implementation, the first data is tabular data.

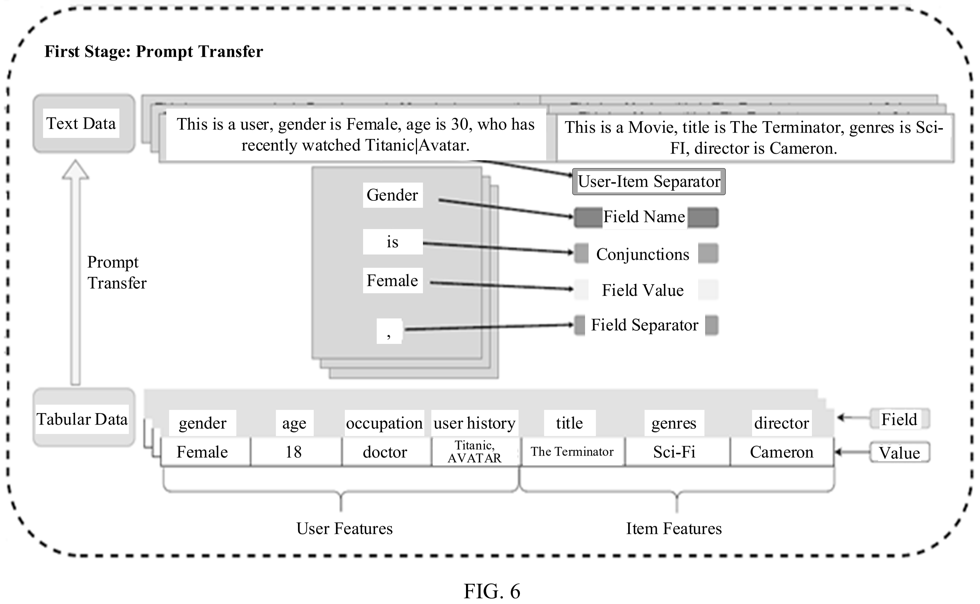

Refer to FIG. 6. The tabular data shown in FIG. 6 is a schematic of the first data. The first data may include the attribute information (a key value (value) shown in FIG. 6) of the user and the item in a plurality of feature dimensions (a field (field) shown in FIG. 6). As shown in FIG. 6, the first data is in a form of the tabular data.

In existing implementation, on the attribute information of each feature dimension in the first data, one-hot encoding may be performed, and embedding processing may be performed through an embedding network, to obtain an embedding vector corresponding to each piece of attribute information (that is, step 503 in this embodiment of this application).

502: Generate second data based on the first data, where the second data is a natural language text used to describe the attribute information.

In this embodiment of this application, to extract semantic information in the attribute information (optionally, which may further include context information), the first data may be converted into text-modality data (namely, the second data) used to describe the attribute information. Different from the tabular data, the second data may be data used as an input of a natural language processing model, that is, the natural language text that may indicate the attribute information of the user or the attribute information of the item.

The following describes how to convert the first data into the second data.

In a possible implementation, the second data may include a character of the dimension, a character of the attribute information, and a character indicating an association between the dimension and the attribute information.

In a possible implementation, the second data further includes a character indicating separation between attribute information in different dimensions.

The dimension may also be referred to as an attribute name.

The attribute information may also be referred to as an attribute value.

For example, "is" may be used as the character indicating the association between the dimension and the attribute information.

For example, "," may be used as the character indicating separation between the attribute information in different dimensions.

For example, a piece of user data in a table has attributes such as an age, a gender, and an occupation, "," is used as a separator between features, and "is" is used as a conjunction between the attribute name and the attribute value. The following sentence may be used to describe a piece of training data: "This is a user, the gender is male, the age is 30, and the user recently watches a movie A and a movie B."

For example, a piece of movie data in a table has attributes such as a title and a category, "," is used as a separator between features, and "is" is used as a conjunction between the attribute name and the attribute value. The following sentence may be used to describe a piece of training data: This is a movie, the title is a movie A, the category is science fiction, and a director is a person A.

In a possible implementation, the first data includes the attribute information of the user and the attribute information of the item in the plurality of dimensions, and the second data further includes a character indicating separation between the attribute information of the user and the attribute information of the item.

For example, "." may be used as a separator between the attribute information of the user and the attribute information of the item. The following sentence may be used to describe a piece of training data: "This is a user, the gender is male, the age is 30, and the user recently watches a movie A and a movie B. This is a movie, the title is the movie A, the category is science fiction, and a director is a person A." Specifically, FIG. 6 is a schematic of converting the first data into the second data.

In a possible implementation, a process of converting the first data into the second data may be performed by, but is not limited to, a preset script.

503: Obtain a first feature representation based on the first data through an embedding network, where the first feature representation includes a plurality of embedding vectors, and each embedding vector corresponds to one dimension.

It should be understood that the embedding network may also be referred to as a collaborative model.

For more specific descriptions of step 503, refer to an embedding operation performed on the attribute information in the conventional technology. Details are not described herein again.

504: Obtain a second feature representation based on the second data through a natural language processing model, where the second feature representation includes a semantic feature of the second data.

In a possible implementation, the second data includes a plurality of character units, and the natural language processing model refers to each character unit and a context of each character unit in the second data when processing each character unit.

For example, the natural language processing model may be a transformer-based neural network, for example, BERT or GPT. The natural language processing model may extract a semantic feature from an input text.

505: Update the embedding network based on a difference between the second feature representation and the first feature representation, to obtain an updated embedding network.

In a possible implementation, the first feature representation and the second feature representation may be further mapped to a same dimension. Then, the embedding network is updated based on a difference between the mapped second feature representation and the mapped first feature representation, to obtain the updated embedding network.

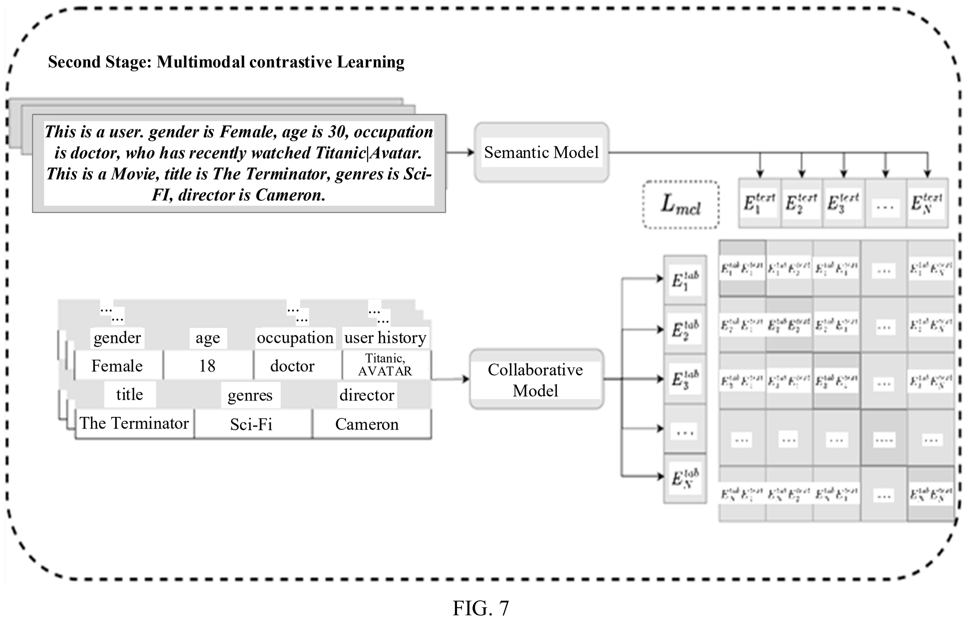

The foregoing operation of mapping to the same dimension may also be referred to as projection (projection). As shown in FIG. 7, at a projection stage, obtained data (the first data and the second data) of two modalities is separately sent to a language model and a collaborative model, to obtain different representations of the two modalities, and then the two modalities are fused and mapped to a same dimension.

For example, the first feature representation and the second feature representation may be mapped to the same dimension through a neural network. For example, mapping may be performed according to the following formulas:

$$E^{tab} = \theta_{col}(x^{tab})W^{tab} + b^{tab}$$

$$E^{text} = \theta_{sem}(x^{text})W^{text} + b^{text}$$

$E^{tab}$ represents a representation of tabular data; $E^t$ represents a representation of text data, $\theta_{col}$ represents a collaborative model; and $\theta_{sem}$ represents a language model. $x^{tab}$ represents original tabular data; $x^{text}$ represents original text data; $W^{tab}$ represents a weight of a projection layer of a collaborative model; $b^{tab}$ represents a bias vector of the projection layer of the collaborative model; $W^{text}$ represents a weight of a projection layer of the language model; and $b^{text}$ represents a bias vector of the projection layer of the language model.

In a possible implementation, the natural language processing model may be updated based on the difference between the second feature representation and the first feature representation, to obtain the updated natural language processing model.

The foregoing step may also be referred to as fusion (Fusion). At a fusion stage, two types of knowledge may be fused in a plurality of manners, for example, comparative learning and model distillation. The comparative learning is used as an example. The comparative learning may be used to fuse representations of the collaborative model and the language model, and combine the collaborative model and the language model for modeling, so that both the collaborative model and the language model can learn knowledge of each other.

For example, the following formulas may be used to construct a loss during comparative learning:

$$\mathcal{L}^{text} = -\frac{1}{N}\sum_{k=1}^{N} log \frac{exp(sim(E_k^{text}, E_k^{tab})/\tau)}{\sum_{j=1}^{N} exp(sim(E_k^{text}, E_j^{tab})/\tau)},$$

$$\mathcal{L}^{tab} = -\frac{1}{N}\sum_{k=1}^{N} log \frac{exp(sim(E_k^{tab}, E_k^{text})/\tau)}{\sum_{j=1}^{N} exp(sim(E_k^{tab}, E_j^{text})/\tau)}.$$

$E_k^{text}$ and $E_k^{tab}$ may represent a text-modality representation and a representation of tabular data that are of a $k^{th}$ piece of data; sim() represents calculating a similarity between samples; exp() represents an exponential operation; $\tau$ is a temperature coefficient; $L_{mcl}$ is an overall loss function; and $L^{tab}$ and $L^{text}$ respectively represent a loss from tabular data to text data and a loss from the text data to the tabular data.

Optionally, a loss $L_{mcl}$ of multi-modality fusion may be a sum of the two losses:

$$\mathcal{L}_{mcl} = \frac{1}{2}(\mathcal{L}^{text} + \mathcal{L}^{tab}).$$

Compared with the conventional technology in which it is difficult for a recommendation model based only on a collaborative signal to model a semantic signal and obtain knowledge of an outside world, in this embodiment of this application, collaborative information and semantic information are combined to perform modeling, so that knowledge of a language model can be fully used, thereby improving prediction effect.

In addition, based on the embodiment corresponding to FIG. 5, an updated collaborative model (that is, the embedding network) may be obtained, and the collaborative model may be fine-tuned in a downstream task. Specifically, attribute information of a second user, attribute information of a second item, and an operation log of the second user on the second item are obtained; prediction operation information of the second user on the second item is obtained based on the attribute information of the second user and the attribute information of the second item through a recommendation model, where the recommendation model includes the updated embedding network obtained based on the embodiment described in FIG. 5; and the recommendation model is fine-tuned based on the operation log and the prediction operation information.

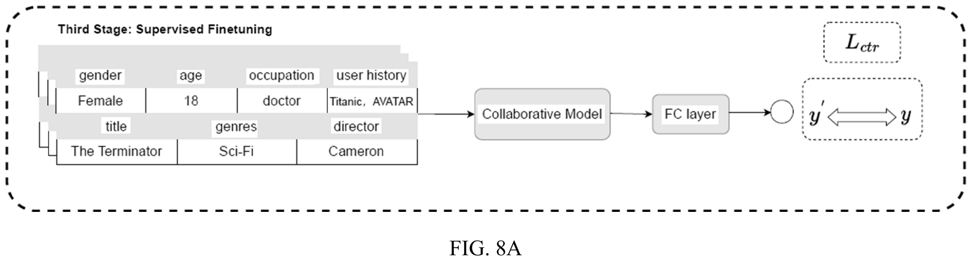

FIG. 8A is a schematic of a fine-tuning process. A loss may be calculated according to the following formula:

$$\mathcal{L}_{ctr} = -\frac{1}{N}\sum_{k=1}^{N}(y_k log(y'_k) + (1 - y_k)log(1 - y'_k)),$$

In addition, based on the embodiment corresponding to FIG. 5, an updated collaborative model (that is, the embedding network) or a fine-tuned collaborative model described in the foregoing embodiment may be obtained, and online recommendation may be performed based on the collaborative model.

Specifically, attribute information of a third user and attribute information of a third item are obtained; prediction operation information of the second user on the second item is obtained based on the attribute information of the third user and the attribute information of the third item through a recommendation model, where the recommendation model includes the updated embedding network obtained based on the embodiment described in FIG. 5 or the fine-tuned collaborative model described in the foregoing embodiment; and when the prediction operation information meets a preset condition, the third item is recommended to the third user.

In a possible implementation, when information is recommended to a user, a probability that the user (for example, the third user) selects a plurality of items (including the third item) may be obtained through calculation, and recommendation indexes of the items for the user are determined based on the probability that the user selects the plurality of items.

After the recommendation indexes of the items for the user are obtained, the recommendation indexes may be ranked, and M items with largest recommendation indexes are recommended to the user.

In a possible implementation, a probability threshold may alternatively be set. When a probability that the user selects the plurality of items (including the item) is greater than the probability threshold, a recommendation may be made to the user.

During information recommendation, recommendation information may be recommended to the user in a form of a list page, to expect the user to perform a behavior action.

In this embodiment of this application, although a natural language processing model is used during training, the natural language processing model is not used during actual online inference. Instead, a collaborative model (which incorporates a processing capability of the natural language processing model) is used, which improves effect of the collaborative model while ensuring a low-latency feature of the model.

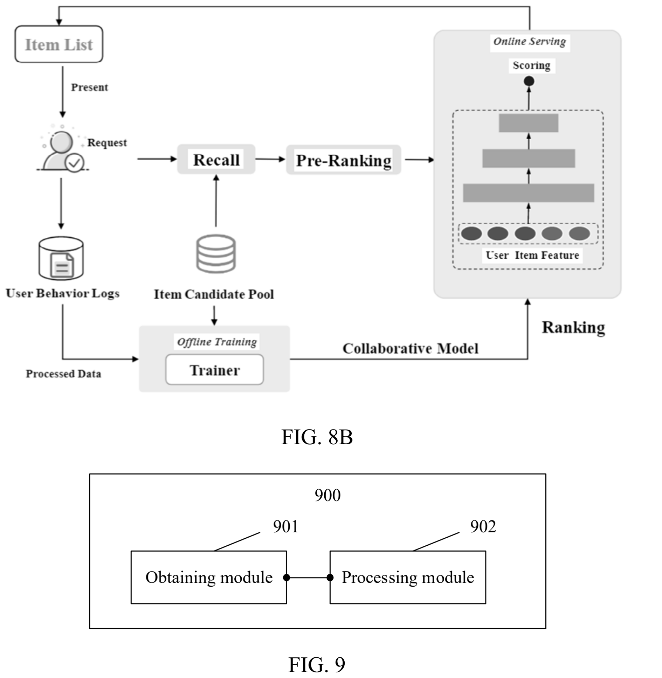

A knowledge recommendation scenario is a typical scenario in application of machine learning. A main structure of the knowledge recommendation scenario is shown in FIG. 8B, and includes a recommendation list, an offline training module, an online inference module, a recall module, a ranking module, and the like. The collaborative model obtained in this embodiment of this application may be applied to the ranking module.

The following describes beneficial effects of this application with reference to experiments.

Offline experiments are conducted on three public datasets and one corporate dataset. Table 1 shows experimental results on three public datasets.

Table 1

| Stage | Model | MovieLens | | | Amazon | | | Alibaba | | |
|---|---|---|---|---|---|---|---|---|---|---|
| | | AUC | Logloss | RelaImpr | AUC | Logloss | RelaImpr | AUC | Logloss | RelaImpr |
| Collaborative Model | DSSM | 0.7901 | 0.4826 | 0% | 0.6481 | 0.4815 | 0% | 0.5696 | 0.3559 | 0% |
| | Wide&Deep | 0.8261 | 0.4348 | 12.41% | 0.6968 | 0.4645 | 32.88% | 0.6280 | 0.1943 | 83.91% |
| | DeepFM | 0.8268 | 0.4219 | 12.65% | 0.6965 | 0.4646 | 32.68% | 0.6272 | 0.1951 | 82.76% |
| | DCN | 0.8313 | 0.4165 | 14.20% | 0.6999 | 0.4642 | 34.97% | 0.6281 | 0.1949 | 84.05% |
| | AutoInt | 0.8290 | 0.4178 | 13.40% | 0.7012 | 0.4632 | 35.85% | 0.6279 | 0.1948 | 83.76% |
| Semantics Model | CTR-BERT | 0.7650 | 0.4944 | -8.65% | 0.6934 | 0.4629 | 30.58% | 0.6005 | 0.2020 | 14.15% |
| | P5 | 0.5541 | 0.5841 | -81.35% | 0.5333 | 0.5475 | -77.51% | 0.5556 | 0.3584 | -20.11% |
| Collab & Seman ★ | CTRL-S (ours) | 0.8367* | 0.4027* | 16.06% | 0.7063* | 0.4612* | 39.30% | 0.6301* | 0.1942* | 86.93% |

Table 2 shows results on the private internal dataset.

Table 2

| Stage | Model | AUC | Logloss | RelaImpr |
|---|---|---|---|---|
| Collaborative | DeepFM | 0.6547 | 0.1801 | 0% |
| | AutoInt | 0.6586 | 0.1713 | 2.52% |
| | DCN | 0.6558 | 0.1757 | 0.71% |
| Semantic | CTR-Bert | 0.6484 | 0.1923 | -4.07% |
| | P5 | 0.5594 | 0.3274 | -61.60% |
| Seman and Col | CTRL | 0.6683 | 0.1696 | 8.79% |

Table 3 shows an example of a parameter quantity and inference efficiency in this embodiment of this application.

Table 3

| | Alibaba | | Amazon | |
|---|---|---|---|---|
| Model | Params | Inf Time | Params | Inf Time |
| DSSM | $6.71 \times 10^7$ | 15s | $3.35 \times 10^7$ | 0.51s |
| DeepFM | $8.82 \times 10^7$ | 18s | $3.45 \times 10^7$ | 0.58s |
| DCN | $8.84 \times 10^7$ | 19s | $3.46 \times 10^7$ | 0.58s |
| AutoInt | $8.82 \times 10^7$ | 19s | $3.45 \times 10^7$ | 0.59s |
| P5 | $2.23 \times 10^8$ | 10832s | $1.10 \times 10^8$ | 440s |
| CTR-Bert | $1.10 \times 10^8$ | 4083s | $1.10 \times 10^8$ | 144s |
| CTRL | $8.82 \times 10^7$ | 19s | $3.45 \times 10^7$ | 0.59s |

After the experiments, it can be seen from performance of the models that accuracy of the model obtained in this embodiment of this application is higher than that of most existing ranking models. In addition, in terms of training and inference efficiency, training and inference efficiency of the model obtained in this embodiment of this application is close to that of the collaborative model, and compared with the language model, an inference latency of the model obtained in this embodiment is significantly reduced.

FIG. 9 is a schematic of a structure of a data processing apparatus 900 according to an embodiment of this application. The apparatus 900 includes the following modules.

The obtaining module 901 is configured to obtain first data, where the first data includes attribute information of a user or attribute information of an item in a plurality of dimensions.

For specific descriptions of the obtaining module 901, refer to the descriptions of step 501 in the foregoing embodiment. This is not described herein again.

A processing module 902 is configured to: generate second data based on the first data, where the second data is a natural language text used to describe the attribute information;

obtain a first feature representation based on the first data through an embedding network, where the first feature representation includes a plurality of embedding vectors, and each embedding vector corresponds to one dimension; obtain a second feature representation based on the second data through a natural language processing model, where the second feature representation includes a semantic feature of the second data; and update the embedding network based on a difference between the second feature representation and the first feature representation, to obtain an updated embedding network.

For specific descriptions of the processing module 902, refer to the descriptions of step 502, step 503, step 504, and step 505 in the foregoing embodiment. Details are not described herein again.

In a possible implementation, the second data includes a plurality of character units, and the natural language processing model refers to each character unit and a context of each character unit in the second data when processing each character unit.

In a possible implementation, the second data includes a character of the dimension, a character of the attribute information, and a character indicating an association between the dimension and the attribute information.

In a possible implementation, the second data further includes a character indicating separation between attribute information in different dimensions.

In a possible implementation, the first data includes the attribute information of the user and the attribute information of the item in the plurality of dimensions, and the second data further includes a character indicating separation between the attribute information of the user and the attribute information of the item.

In a possible implementation, the first data is tabular data.

In a possible implementation, the processing module is further configured to:

map the first feature representation and the second feature representation to a same dimension.

The processing module is specifically configured to:

based on a difference between the mapped second feature representation and the mapped first feature representation.

In a possible implementation, the processing module is further configured to:

update the natural language processing model based on the difference between the second feature representation and the first feature representation, to obtain an updated natural language processing model.

An embodiment of this application further provides a data processing apparatus. The apparatus includes:

an obtaining module, configured to obtain attribute information of a second user, attribute information of a second item, and an operation log of the second user on the second item; and

a processing module, configured to obtain, based on the attribute information of the second user and the attribute information of the second item through a recommendation model, prediction operation information of the second user on the second item, where the recommendation model includes the updated embedding network obtained based on the embodiment described in FIG. 5; and

fine-tune the recommendation model based on the operation log and the prediction operation information.

An embodiment of this application further provides a data processing apparatus. The apparatus includes:

an obtaining module, configured to obtain attribute information of a third user and attribute information of a third item; and

a processing module, configured to obtain prediction operation information of the second user on the second item based on the attribute information of the third user and the attribute information of the third item through a recommendation model, where the recommendation model includes the updated embedding network obtained based on the embodiment described in FIG. 5 or the fine-tuned recommendation model described in the foregoing embodiment; and

when the prediction operation information meets a preset condition, recommend the third item to the third user.

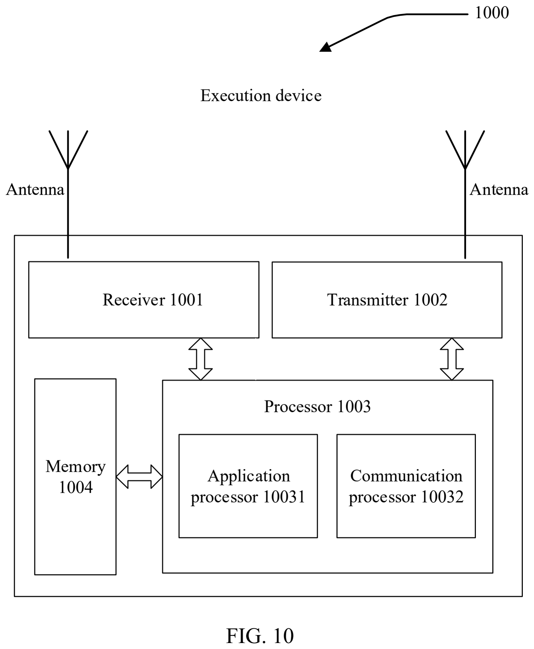

The following describes an execution device provided in an embodiment of this application. FIG. 10 is a diagram of a structure of an execution device according to an embodiment of this application. The execution device 1000 may be specifically represented as a mobile phone, a tablet, a notebook computer, an intelligent wearable device, a server, or the like. This is not limited herein. Specifically, the execution device 1000 includes a receiver 1001, a transmitter 1002, a processor 1003 (there may be one or more processors 1003 in the execution device 1000), and a memory 1004. The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subset thereof, or an extended set thereof. The operation instructions may include various operation instructions for implementing various operations.

The processor 1003 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1003, or may be implemented by the processor 1003. The processor 1003 may be an integrated circuit chip, and have a signal processing capability. In an implementation process, steps in the method can be implemented by using a hardware integrated logic circuit in the processor 1003, or by using instructions in a form of software. The processor 1003 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1004. The processor 1003 reads information in the memory 1004, and runs, in combination with hardware of the processor 1003, the recommendation model obtained through training based on steps 501 to 504 in the foregoing embodiment.

The receiver 1001 may be configured to receive input digit or character information, and generate a signal input related to related setting and function control of the execution device. The transmitter 1002 may be configured to output the digit or character information through a first interface. The transmitter 1002 may be further configured to send an instruction to a disk group through the first interface, to modify data in the disk group. The transmitter 1002 may further include a display device like a display.

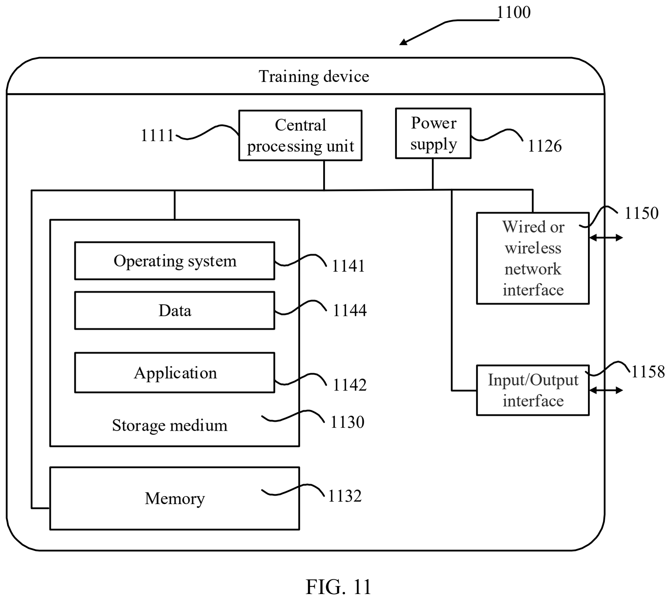

An embodiment of this application further provides a training device. FIG. 11 is a diagram of a structure of a training device according to an embodiment of this application. Specifically, the training device 1100 is implemented by one or more servers. The training device 1100 may vary greatly with configuration or performance, and may include one or more central processing units (central processing units, CPUs) 1111 (for example, one or more processors), a memory 1132, and one or more storage media 1130 (for example, one or more mass storage devices) that store an application 1142 or data 1144. The memory 1132 and the storage medium 1130 may be used for temporary storage or persistent storage. A program stored in the storage medium 1130 may include one or more modules (not shown in the figure), and each module may include a series of instruction operations on the training device. Further, the central processing unit 1111 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, such as Windows Server™, Mac OS X™, Unix™, Linux™, and FreeBSD™.

Specifically, the training device may perform steps 501 to 504 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used for signal processing. When the program runs on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiment, or a chip in the training device performs the data processing method described in the foregoing embodiment. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

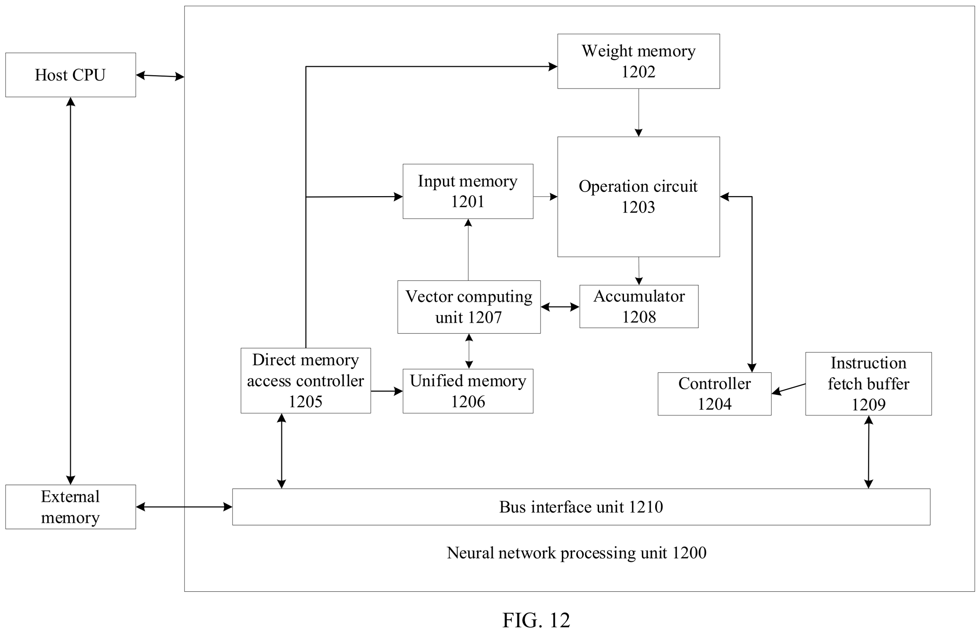

Specifically, FIG. 12 is a diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

The NPU 1200 may implement, through cooperation between internal components, the data processing method provided in the embodiment described in FIG. 5.

More specifically, in some implementations, the operation circuit 1203 in the NPU 1200 includes a plurality of process engines (Process Engines, PEs). In some implementations, the operation circuit 1203 is a two-dimensional systolic array. The operation circuit 1203 may alternatively be a one-dimensional systolic array or another electronic circuit that can perform mathematical operations such as multiplication and addition. In some implementations, the operation circuit 1203 is a general-purpose matrix processor.

For example, it is assumed that there are an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 through a direct memory access controller (Direct Memory Access Controller, DMAC) DMAC 1205. The input data is also transferred to the unified memory 1206 through the DMAC.

A BIU is a bus interface unit, namely, a bus interface unit 1210, and is configured to perform interaction between an AXI bus and the DMAC and between the AXI bus and an instruction fetch buffer (Instruction Fetch Buffer, IFB) 1209.

The bus interface unit (Bus Interface Unit, BIU for short) 1210 is used by the instruction fetch buffer 1209 to obtain an instruction from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector calculation unit 1207 includes a plurality of operation processing units; and if necessary, performs further processing such as vector multiplication, vector addition, an exponential operation, a logarithmic operation, or value comparison on an output of the operation circuit 1203. The vector calculation unit 1207 is mainly configured to perform network calculation, such as batch normalization (batch normalization), pixel-level summation, and upsampling on a feature plane, at a non-convolutional/fully connected layer in a neural network.

In some implementations, a processed vector output by the vector calculation unit 1207 can be stored in the unified memory 1206. For example, the vector calculation unit 1207 may apply a linear function or a non-linear function to the output of the operation circuit 1203, for example, perform linear interpolation on a feature plane extracted at a convolutional layer. For another example, the vector calculation unit 1207 may apply a linear function or a non-linear function to a vector of an accumulated value, to generate an activation value. In some implementations, the vector calculation unit 1207 generates a normalized value, a value obtained by performing pixel-level summation, or a combination thereof. In some implementations, the processed output vector can be used as an activation input to the operation circuit 1203. For example, the processed output vector can be used at a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one place, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that there are communication connections between the modules, and may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that are performed by a computer program can be easily implemented by using corresponding hardware. Moreover, there may be various specific hardware structures, such as analog circuits, digital circuits, or dedicated circuits, used to achieve a same function. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A data processing method, wherein the method comprises:

    obtaining first data, wherein the first data comprises attribute information of a user or attribute information of an item in a plurality of dimensions;
    generating second data based on the first data, wherein the second data is a natural language text used to describe the attribute information;
    obtaining a first feature representation based on the first data through an embedding network, wherein the first feature representation comprises a plurality of embedding vectors, and each embedding vector corresponds to one dimension;
    obtaining a second feature representation based on the second data through a natural language processing model, wherein the second feature representation comprises a semantic feature of the second data; and
    updating the embedding network based on a difference between the second feature representation and the first feature representation, to obtain the updated embedding network.

2. The method according to claim 1, wherein the second data comprises a plurality of character units, and the natural language processing model refers to each character unit and a context of each character unit in the second data when processing each character unit.

3. The method according to claim 1 or 2, wherein the second data comprises:
    a character of the dimension, a character of the attribute information, and a character indicating an association between the dimension and the attribute information.

4. The method according to claim 3, wherein the second data further comprises a character indicating separation between attribute information in different dimensions.

5. The method according to claim 3 or 4, wherein the first data comprises the attribute information of the user and the attribute information of the item in the plurality of dimensions, and the second data further comprises a character indicating separation between the attribute information of the user and the attribute information of the item.

6. The method according to any one of claims 1 to 5, wherein the first data is tabular data.

7. The method according to any one of claims 1 to 6, wherein the method further comprises:

    mapping the first feature representation and the second feature representation to a same dimension; and
    based on the difference between the second feature representation and the first feature representation comprises:
    based on a difference between the mapped second feature representation and the mapped first feature representation.

8. The method according to any one of claims 1 to 7, wherein the method further comprises:
    updating the natural language processing model based on the difference between the second feature representation and the first feature representation, to obtain the updated natural language processing model.

9. A data processing method, wherein the method comprises:

obtaining attribute information of a second user, attribute information of a second item, and an operation log of the second user on the second item;

obtaining, based on the attribute information of the second user and the attribute information of the second item through a recommendation model, prediction operation information of the second user on the second item, wherein the recommendation model comprises the updated embedding network according to any one of claims 1 to 8; and

fine-tuning the recommendation model based on the operation log and the prediction operation information.

10. A data processing method, wherein the method comprises:

obtaining attribute information of a third user and attribute information of a third item;

obtaining, based on the attribute information of the third user and the attribute information of the third item through a recommendation model, prediction operation information of the second user on the second item, wherein the recommendation model comprises the updated embedding network according to any one of claims 1 to 8 or the fine-tuned recommendation model according to claim 9; and

when the prediction operation information meets a preset condition, recommending the third item to the third user.

11. A data processing apparatus, wherein the apparatus comprises:

an obtaining module, configured to obtain first data, wherein the first data comprises attribute information of a user or attribute information of an item in a plurality of dimensions; and

a processing module, configured to generate second data based on the first data, wherein the second data is a natural language text used to describe the attribute information;

obtain a first feature representation based on the first data through an embedding network, wherein the first feature representation comprises a plurality of embedding vectors, and each embedding vector corresponds to one dimension;

obtain a second feature representation based on the second data through a natural language processing model, wherein the second feature representation comprises a semantic feature of the second data; and

update the embedding network based on a difference between the second feature representation and the first feature representation, to obtain the updated embedding network.

12. The apparatus according to claim 11, wherein the second data comprises a plurality of character units, and the natural language processing model refers to each character unit and a context of each character unit in the second data when processing each character unit.

13. The apparatus according to claim 11 or 12, wherein the second data comprises a character of the dimension, a character of the attribute information, and a character indicating an association between the dimension and the attribute information.

14. The apparatus according to claim 13, wherein the second data further comprises a character indicating separation between attribute information in different dimensions.

15. The apparatus according to claim 13 or 14, wherein the first data comprises the attribute information of the user and the attribute information of the item in the plurality of dimensions, and the second data further comprises a character indicating separation between the attribute information of the user and the attribute information of the item.

16. The apparatus according to any one of claims 11 to 15, wherein the first data is tabular data.

17. The apparatus according to any one of claims 11 to 16, wherein the processing module is further configured to:

map the first feature representation and the second feature representation to a same dimension; and
the processing module is specifically configured to:
based on a difference between the mapped second feature representation and the mapped first feature representation.

18. The apparatus according to any one of claims 11 to 17, wherein the processing module is further configured to: update the natural language processing model based on the difference between the second feature representation and the first feature representation, to obtain the updated natural language processing model.

19. A data processing apparatus, wherein the apparatus comprises:

an obtaining module, configured to obtain attribute information of a second user, attribute information of a second item, and an operation log of the second user on the second item; and

a processing module, configured to obtain, based on the attribute information of the second user and the attribute information of the second item through a recommendation model, prediction operation information of the second user on the second item, wherein the recommendation model comprises the updated embedding network according to any one of claims 1 to 8; and

fine-tune the recommendation model based on the operation log and the prediction operation information.

20. A data processing apparatus, comprising:

an obtaining module, configured to obtain attribute information of a third user and attribute information of a third item; and

a processing module, configured to obtain, based on the attribute information of the third user and the attribute information of the third item through a recommendation model, prediction operation information of the second user on the second item, wherein the recommendation model comprises the updated embedding network according to any one of claims 1 to 8 or the fine-tuned recommendation model according to claim 9; and

when the prediction operation information meets a preset condition, recommend the third item to the third user.

21. A computing device, wherein the computing device comprises a memory and a processor, the memory stores code, and the processor is configured to: obtain the code, and perform the method according to any one of claims 1 to 10.

22. A computer storage medium, wherein the computer storage medium stores one or more instructions, and when the instructions are executed by one or more computers, the one or more computers are enabled to perform the method according to any one of claims 1 to 10.

23. A computer program product, comprising code, wherein when the code is executed, the code is used to implement the method according to any one of claims 1 to 10.

Intelligent information chain

Smart product and industry application

| Translation/Text analysis/... | Speech/Vision/ Image/... |

| Data | Data processing: | Data training/ Machine learning/ Deep learning | Searching/ Inference/ Decision-making | ... |

| Infrastructure | Sensors | Smart chips | Basic platforms | ... |

IT value chain

FIG. 1

FIG. 2

300

Data storage system 250

Execution device 210

...

Communication network

Local device 301

Local device 302

For example

FIG. 3

Offline training module → Recommendation model → Online inference module

A user feeds back displayed items ← Select and rank to-be displayed items

FIG. 4A

Transformer model

Neural network layer

...

Transformer layer

...

Neural network layer

Embedding layer

FIG. 4B

EP 4 700 608 A1

$X_{l+1}$

Target transformer layer

Addition and normalization layer

Feedforward layer FFN

Intermediate layer

Addition and normalization layer

Multi-head attention layer

Head 1

Head 2

...

Head N

$X_l$

FIG. 4C

Obtain first data, where the first data includes attribute information of a user or attribute information of an item in a plurality of dimensions ⟍ 501

Generate second data based on the first data, where the second data is a natural language text used to describe the attribute information ⟍ 502

Obtain a first feature representation based on the first data through an embedding network, where the first feature representation includes a plurality of embedding vectors, and each embedding vector corresponds to one dimension ⟍ 503

Obtain a second feature representation based on the second data through a natural language processing model, where the second feature representation includes a semantic feature of the second data ⟍ 504

Update the embedding network based on a difference between the second feature representation and the first feature representation, to obtain an updated embedding network ⟍ 505

FIG. 5

EP 4 700 608 A1

**First Stage: Prompt Transfer**

FIG. 6

EP 4 700 608 A1

**Second Stage: Multimodal contrastive Learning**

*This is a user. gender is Female, age is 30, occupation is doctor, who has recently watched Titanic|Avatar. This is a Movie, title is The Terminator, genres is Sci-FI, director is Cameron.*

Semantic Model

$L_{mcl}$

$E_1^{text}$ $E_2^{text}$ $E_3^{text}$ $\cdots$ $E_N^{text}$

| gender | age | occupation | user history |
|---|---|---|---|
| Female | 18 | doctor | Titanic, AVATAR |

| title | genres | director |
|---|---|---|
| The Terminator | Sci-Fi | Cameron |

Collaborative Model

$E_1^{tab}$

$E_2^{tab}$

$E_3^{tab}$

$\cdots$

$E_N^{tab}$

| | | | | |
|---|---|---|---|---|
| $E_1^{tab}E_1^{text}$ | $E_1^{tab}E_2^{text}$ | $E_1^{tab}E_3^{text}$ | $\cdots$ | $E_1^{tab}E_N^{text}$ |
| $E_2^{tab}E_1^{text}$ | $E_2^{tab}E_2^{text}$ | $E_2^{tab}E_3^{text}$ | $\cdots$ | $E_2^{tab}E_N^{text}$ |
| $E_3^{tab}E_1^{text}$ | $E_3^{tab}E_2^{text}$ | $E_3^{tab}E_4^{text}$ | $\cdots$ | $E_3^{tab}E_N^{text}$ |
| $\cdots$ | $\cdots$ | $\cdots$ | $\cdots$ | $\cdots$ |
| $E_N^{tab}E_1^{text}$ | $E_N^{tab}E_2^{text}$ | $E_N^{tab}E_3^{text}$ | $\cdots$ | $E_N^{tab}E_N^{text}$ |

FIG. 7

FIG. 8A

FIG. 8B

FIG. 9

1000

Execution device

Antenna

Antenna

| Receiver 1001 | Transmitter 1002 |
|---|---|

Processor 1003

Memory 1004

| Application processor 10031 | Communication processor 10032 |
|---|---|

FIG. 10

1100

Training device

1111

Central processing unit

Power supply

1126

Operating system 1141

Data 1144

Application 1142

Storage medium 1130

Memory 1132

Wired or wireless network interface

1150

Input/Output interface

1158

FIG. 11

EP 4 700 608 A1

Host CPU

Weight memory
1202

Input memory
1201

Operation circuit
1203

Vector computing
unit 1207

Accumulator
1208

Direct memory
access controller
1205

Unified memory
1206

Controller
1204

Instruction
fetch buffer
1209

External
memory

Bus interface unit 1210

Neural network processing unit 1200

FIG. 12

## INTERNATIONAL SEARCH REPORT

| International application No. |
|---|
| **PCT/CN2024/091820** |

| A. | CLASSIFICATION OF SUBJECT MATTER |
|---|---|

G06F16/9535(2019.01)i; G06F16/33(2019.01)i; G06F40/30(2020.01)i; G06Q30/0601(2023.01)i; G06N3/048(2023.01)i; G06N3/084(2023.01)i

According to International Patent Classification (IPC) or to both national classification and IPC

| B. | FIELDS SEARCHED |
|---|---|

Minimum documentation searched (classification system followed by classification symbols)

IPC:G06F,G06Q,G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 华为, 李向阳, 数据, 推荐, 属性, 语义, 文字, 协同, 预测, 精度, 嵌入, 自然语言, 更新, 模型, 多模态, NLP, data, model, semantic, collaborative, target, encoder, predict, precision

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116595252 A (HUAWEI TECHNOLOGIES CO., LTD.) 15 August 2023 (2023-08-15) claims 1-23 | 1-23 |
| Y | CN 115618950 A (HUAWEI TECHNOLOGIES CO., LTD.) 17 January 2023 (2023-01-17) description, paragraphs 7-34, and figures 1-10 | 1-23 |
| Y | CN 114936901 A (SHANDONG UNIVERSITY) 23 August 2022 (2022-08-23) description, paragraphs 5-48, and figures 1-3 | 1-23 |
| A | CN 110851700 A (ZHEJIANG UNIVERSITY OF TECHNOLOGY) 28 February 2020 (2020-02-28) entire document | 1-23 |
| A | CN 113902005 A (BEIJING BAIDU NETCOM SCIENCE AND TECHNOLOGY CO., LTD.) 07 January 2022 (2022-01-07) entire document | 1-23 |
| A | CN 115455970 A (NORTH MINZU UNIVERSITY) 09 December 2022 (2022-12-09) entire document | 1-23 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 July 2024** | **16 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/091820** |

**C. DOCUMENTS CONSIDERED TO BE RELEVANT**

| Category* | Citation of document, with indication, where appropriate, of the relevant passages | Relevant to claim No. |
|---|---|---|
| A | CN 115982452 A (PING AN LIFE INSURANCE COMPANY OF CHINA, LTD.) 18 April 2023 (2023-04-18) entire document | 1-23 |
| A | US 2022277142 A1 (WALMART APOLLO, LLC.) 01 September 2022 (2022-09-01) entire document | 1-23 |

Form PCT/ISA/210 (second sheet) (July 2022)

**INTERNATIONAL SEARCH REPORT**
Information on patent family members

International application No.

**PCT/CN2024/091820**

| Patent document cited in search report | | | Publication date (day/month/year) | Patent family member(s) | | | Publication date (day/month/year) |
|---|---|---|---|---|---|---|---|
| CN | 116595252 | A | 15 August 2023 | None | | | |
| CN | 115618950 | A | 17 January 2023 | WO | 2024067779 | A1 | 04 April 2024 |
| CN | 114936901 | A | 23 August 2022 | None | | | |
| CN | 110851700 | A | 28 February 2020 | None | | | |
| CN | 113902005 | A | 07 January 2022 | None | | | |
| CN | 115455970 | A | 09 December 2022 | None | | | |
| CN | 115982452 | A | 18 April 2023 | None | | | |
| US | 2022277142 | A1 | 01 September 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310528802